# NOUVEAU FASCICULE DE BREVET EUROPEEN

(11) **EP 0 546 200 B2**
(45) Date de publication et mention de la décision concernant l'opposition: **12.06.2002**
(45) Mention de la délivrance du brevet: 20.05.1998
(21) Numéro de dépôt: 91120821.3
(22) Date de dépôt: 04.12.1991
(51) Int. Cl.: A23C 9/13, A23C 9/154, A23G 1/00, A23F 5/14, A23L 2/38, A23C 13/14

(54) **Produit laitier liquide et procédé de préparation**
Flüssiges Milchprodukt und Verfahren zu seiner Zubereitung
Liquid milk product and process for its preparation

(43) Date de publication de la demande: 16.06.1993
(73) Titulaire: SOCIETE DES PRODUITS NESTLE S.A., 1800 Vevey (CH)
(72) Inventeur: Groux, Michel John Arthur, CH-3438 Lauperswil (CH); Hugelshofer, Willy, CH-3510 Konolfingen (CH)

(56) Documents cités:
- EP-A- 0 109 372
- EP-A- 0 117 011
- DE-A- 3 008 681
- PATENT ABSTRACTS OF JAPAN vol. 13, no. 589 (C-670), 28 mars 1988; & JP-A-1 247 038 (TOYO SEIKAN KAISHA LTD) 02.10.1989
- PATENT ABSTRACTS OF JAPAN vol. 10, no. 182 (C-356), 19 juillet 1984; & JP-A-61 028 344 (NIYATO SEIKA K.K.) 08.02.1986
- PATENT ABSTRACTS OF JAPAN vol. 11, no. 273 (C-445)(2720), 4 septembre 1987; & JP-A-62 074 241 (KANEBO FOODS LTD) 06.04.1987
- Bengtsson and Samuelsson, Svenska Mejeritidningen 61(1), 1969, 18-21
- Alfa-Laval Brochure "Aseptic dosing unit ALDOSE", March 1986 (R2)
- Merk Index 1989, pp. 248, 249, 1460-1461

## Description

L'invention concerne un procédé de préparation d'un produit laitier liquide de longue conservation. Actuellement, pour préparer un lait ou une crème acidifié liquide de longue conservation, on peut utiliser l'un ou l'autre des procédés suivants:
on stérilise le produit à ultra haute température (UHT), puis on le conditionne aseptiquement dans des emballages, par exemple du type "Tetra bricks^{R}" ou
on conditionne le produit non stérilisé dans un emballage, par exemple du genre des boîtes métalliques et on le stérilise dans son emballage.

Dans les deux cas, la stabilité à l'entreposage prolongé ne peut être obtenue que si l'on ajuste le pH à environ 4,2 ou en dessous et si l'on ajoute un agent épaississant, par exemple une pectine avant la stérilisation.

Un procédé décrit dans le brevet CAN 882.626, relatif à la préparation de lait ou de crème aigre de longue conservation comprend une étape de stérilisation UHT suivie d'un refroidissement rapide, puis d'une acidification jusqu'à un pH voisin du pH isoélectrique de la caséine (4,6-5,1) et d'une gélification à la température ambiante.

Dans Patent abs. of Japan, vol. 10, No 182 (356) on décrit une boisson au café stérilisée susceptible de présenter trois consistances possibles, de liquide, de gel ou de sorbet suivant la température d'entreposage. A cet effet, le produit contient de la gélatine.

Dans Patent abs. of Japan, vol. 13, No 589 (670), on décrit une boisson au lait faiblement acide à base de café, thé ou cacao, dont le pH est 6,5 à 7 et qui est stérilisée en boîte. Pour la préparer, on fait barbotter un gaz inerte dans le mélange avant de le conditionner à chaud dans des boîtes, de gazer l'espace de tête avec un mélange d'azote et de vapeur, de fermer hermétiquement les boîtes et de les stériliser.

Dans une fourchette très limitée de pH, par exemple 6,3 ou au-dessus, il est possible de préparer des produits à base de lait faiblement acides en évitant la gélification des protéines, mais dans ce cas l'on doit recourir à l'addition d'un sel de stabilisation, par exemple l'hydrogénophosphate disodique pour protéger les protéines contre la floculation lors de la stérilisation et lors de l'entreposage du produit. En dessous d'un seuil de pH d'environ 6,3, il faudrait neutraliser franchement, par addition d'un alcali, par exemple une base forte telle que la soude ou la potasse, mais dans ce cas l'on n'obtiendrait plus un produit acide. Malheureusement, les additifs tels que les sels de stabilisation apportent une modification d u goût préjudiciable à la qualité lorsqu'ils sont ajoutés en quantité efficace.

On connaît de Bengtsson & Samuelson, Svenska Mejeritidnigen, 61(1), 18-20 (1969) un lait stérilisé aromatisé aux fruits fabriqué à partir de lait partiellement écrémé modérément pasteurisé que l'on traite par UHT. Dans un mode de réalisation préféré, on stérilise séparément une solution concentrée d'acide citrique que l'on mélange à un concentré de fraise additionné de vanille et que l'on ajoute au lait stérilisé dans une cuve aseptique. On note la présence de floculation dans le produit final. On remarque également que, dans les tests de conservation, les produits sont entreposés dans des conditions de réfrigération (à +5° C) et pas à température ambiante comme c'est généralement le cas des tests de conservation pour des produits stérilisés de longue conservation. Ce document mentionne les laits aromatisés au chocolat, malt, café, vanille et cola du commerce qui sont pasteurisés.

La brochure de Alfa-Laval, "Aseptic dosing unit ALDOSE", mars 1986, se rapporte à une unité de dosage aseptique de solutions vraies ou de suspensions, pour lesquelles la stérilisation thermique n'est pas possible, autrement dit qu'un traitement thermique de stérilisation dégraderaient, et dans laquelle les ingrédients à doser sont débarrassés des bactéries et des spores par filtration stérile.

L'invention se propose de résoudre le problème de la préparation de produits laitiers faiblement acides, en pratique de pH supérieur à environ 5,2, stérilisés sans recours à l'addition de sels de stabilisation, de gélatine au d'alcali et qui ne présentent pas de coagulation visible ni de séparation de phases à l'entreposage.

Le procédé selon l'invention est caractérisé par le fait que l'on stérilise une base lactique neutre exempte d'alcali, de sel de stabilisation ou d'agent gélifiant, par UHT, que l'on ajoute aseptiquement un extrait aqueux de café préalablement stérilisé et que l'on conditionne aseptiquement le mélange.

Dans un mode de réalisation particulier de préparation d'un produit de type cappuccino, l'extrait aqueux de café contient également du cacao.

Selon l'invention, on entend par "base lactique neutre" tout produit à base de protéines lactiques traité thermiquement. Ce peut être un lait ou une crème frais ou reconstitué à partir de poudre.

L'agent acide est un extrait de café contenant éventuellement du cacao.

On peut ajouter au produit fabriqué selon l'invention le cas échéant des agents sucrants, aromatisants, carbonatants, moussants par exemple dans le cas d'une boisson.

Pour mettre en oeuvre le procédé, on traite le lait ou la crème constituant la base lactique par tout moyen permettant sa stérilisation par traitement thermique continu UHT. Ce peut être par un moyen de chauffage indirect, par exemple un appareil à plaques ou tubulaire ou direct, par exemple un système d'injection de vapeur directement dans la base lactique. La montée en température est suivie d'un maintien à la température de stérilisation pendant un certain temps, après quoi on prérefroidit, on homogénéise la base lactique, puis on la refroidit.

Le refroidissement peut se faire au moyen d'un échangeur à plaques ou tubulaire. Dans le cas d'une injection directe de vapeur, on insère de préférence un prérefroidissement, par exemple par expansion sous vide entre le traitement thermique et l'homogénéisation.

Séparément, on traite thermiquement un extrait aqueux de café, par exemple un extrait de café instantané. Cette opération peut se faire de manière analogue au traitement thermique de la base lactique.

Bien entendu, toutes les opérations qui suivent les traitements thermiques de stérilisation doivent être effectuées de manière aseptique.

On mélange la base lactique et l'agent acide
une fois aseptisés, refroidis et le cas échéant homogénéisés, soit par charges, par exemple dans une cuve stérilisée muni d'un agitateur, soit en continu directement dans un tubulure conduisant à une remplisseuse aseptique. On conditionne enfin les produits de manière aseptique dans des emballages, par exemple des cartons multicouches "Tetra bricks®" ou des boîtes.

Lorsque l'on désire préparer une boisson carbonatée, on injecte du CO2 préalablement filtré stérilement dans le mélange de la base lactique et de l'agent acide.

Lorsque l'on veut produire une boisson moussante, on peut ajouter un agent moussant et prévoir un espace libre dans l'emballage pour permettre la génération de mousse, par exemple par agitation de l'emballage juste avant consommation.

Le procédé selon l'invention permet l'accès à des produits jusqu'alors inconnus, par exemple des boissons liquides prêtes à être consommées du genre cappuccino,
que l'on ne savait pas produire même en utilisant la technique traditionnelle avec sel de stabilisation.

Les exemples ci-après illustrent l'invention. Dans ceux-ci, les parties et pourcentages sont en poids, sauf indication contraire.

### Exemple 1 : Lait au café

### 1.1 Selon l'invention

A 70 kg d'eau on ajoute 3,4 kg de poudre de café instantané et 10,4 kg de saccharose, ces deux derniers ingrédients ayant été prémélangés à sec.
On complète par une adjonction d'eau jusqu'à 99,2 kg.

Séparément, on pèse 100,84 kg de lait à 3% de matière grasse lactique, on le pasteurise à 85°C, puis on le refroidit à moins de 10°C. On le préchauffe ensuite en continu à 80°C, on le porte à 150°C par injection directe de vapeur et on le maintient 3 s à cette température, puis on le refroidit par expansion sous vide à 78°C. On l'homogénéise en deux étapes à 250, puis 50 b et on le refroidit à 20°C. On entrepose le lait ainsi aseptisé dans une cuve stérilisée munie d'un agitateur.

Toujours séparément, on traite thermiquement la solution aqueuse de café sucré dans un appareil à plaques à 145°C pendant 5s, puis on la refroidit en continu à 20°C toujours à l'aide d'un appareil à plaques. On ajoute progressivement cette solution aseptisée au lait aseptisé dans la cuve stérile précédente en brassant lentement.

On conditionne enfin le mélange précédent aseptiquement dans des cartons Tetra Pack® multicouches de 200 ml. La boisson obtenue a un pH de 6,17.

### 1.2 Exemple comparatif

A titre de comparaison, on prépare une solution aqueuse de café instantané sucré par addition à 70 kg d'eau de 0,28 kg de Na₂HPO₄,2H₂O, 3,4 kg de café instantané et 10,4 kg de saccharose, ces trois derniers ingrédients ayant été prémélangés à sec.

Séparément, on pasteurise 100,84 kg de lait à 3% de matière grasse lactique à 85°C pendant 5 s, on l'homogénéise à 100 b à 85°C, puis on le refroidit à moins de 10°C et on l'ajoute à la solution de sucre/extrait de café/sel stabilisant ci-dessus.

On ajuste ensuite le mélange à 200 kg en complétant avec de l'eau. On stérilise ensuite le mélange à 150°C/3 s, après l'avoir préchauffé en continu à 80°C, on le refroidit par expansion sous vide à 78°C, on l'homogénéise à 250 + 50 b, on le refroidit à 20°C et on le conditionne aseptiquement en cartons multicouches Tetra Pak® de 200 ml.
Le mélange obtenu a un pH de 6,43.

### Evaluation des produits

Contre toute attente, le produit préparé selon 1.1 est de structure parfaitement homogène malgré l'absence de sel stabilisant (Na₂HPO₄,2H₂O). Après deux mois à 20°C comme à 30°C, les deux produits sont toujours parfaitement homogènes. De plus, à la dégustation le produit selon 1.1 a un goût de café plus franc et plus corsé que celui préparé selon 1.2.

### Exemple 2: Lait au café

On répète le procédé de l'exemple 1.1 avec pour unique différence que la solution aqueuse est cette fois-ci non pas traitée à 145°C pendant 5 s à l'aide d'un système indirect de chauffage mais au contraire par injection directe de vapeur à 150°C pendant 3 s.

A l'évaluation, on constate que le produit est parfaitement homogène malgré l'absence de sel stabilisant (Na₂HPO₄,2H₂O) et qu'en outre il a un goût de café plus franc que le produit de l'exemple comparatif (1.2), mais moins corsé, et est par ailleurs de même pH que le produit de l'exemple 1.1.

### Exemple 3: Cappuccino

### 3.1 Selon l'invention

On ajoute à 70 kg d'eau 7 kg de saccharose, 2 kg de poudre de café instantané, après avoir prémélangé à sec ces deux ingrédients et on complete par de l'eau jusqu'à 89,89 kg.

Séparément on pèse 100 kg de lait à 3% de matière grasse lactique que l'on pasteurise, homogénéise et refroidit comme dans l'exemple 1.1.

A ce lait refroidit, on ajoute 2 kg de poudre de cacao partiellement dégraissé, 40 g d'un stabilisant de sédimentation du cacao (Genulacta K-100®), 70 g de sel de cuisine et 8 kg de saccharose, tous ces ingrédients ayant été préalablement mélangés à sec.

On stérilise ensuite ce mélange à 150°C/3 s par injection directe de vapeur, on l'homogénéise et on le refroidit comme l'a été le mélange de l'exemple 1.1.
On entrepose ce lait aseptisé dans une cuve stérilisée munie d'un agitateur.

Séparément toujours, on traite thermiquement la solution aqueuse de sucre et de café comme dans l'exemple 1.1 et on ajoute progressivement cette solution aseptisée au lait cacaoté entreposé dans la cuve stérilisée en brassant lentement. On conditionne ensuite aseptiquement le mélange. Le produit obtenu a un pH de 6,49.

### 3.2 Exemple comparatif

Pour des raisons inexpliquées, il n'a pas été possible de fabriquer un produit laitier contenant à la fois du café et du cacao selon un procédé similaire à celui de l'exemple comparatif 1.2. Le produit obtenu était soit inhomogène, soit l'est devenu rapidement après quelques jours d'entreposage dans son emballage.

### Evaluation du produit selon l'invention (3.1)

Celui-ci est parfaitement homogène et le reste au cours de l'entreposage. Tout au plus observe-t-on avec le temps une légère sédimentation du cacao sans que celle-ci soit plus accentuée que dans toute boisson lactique cacaotée commerciale remplie aseptiquement.

### Exemple 4: Cappuccino

On procède de la même façon qu'à l'exemple 3.1, à la différence près suivante:

Au lieu d'ajouter la solution aqueuse aseptisée de sucre et de café dans la cuve stérilisée contenant le lait cacaoté lui aussi aseptisé et de mélanger les 2 phases avant de conditionner le tout, on mélange en continu la solution aqueuse aseptisée de sucre et de café, au lait cacaoté aseptisé, par exemple en couplant deux tuyauteries dans une pièce en T de telle sorte que le mélange soit instantanément homogène et on conditionne aseptiquement ce mélange sans attendre.

## Revendications

1. Procédé de préparation d'un lait au café liquide faiblement acide, de longue conservation, **caractérisé par le fait que** l'on stérilise une base lactique neutre exempte d'alcali, de sel de stabilisation ou d'agent gélifiant, par UHT, que l'on ajoute aseptiquement un extrait aqueux de café préalablement stérilisé et que l'on conditionne aseptiquement le mélange.

2. Procédé selon la revendication 1, **caractérisé par le fait que** l'extrait aqueux de café contient du cacao.

3. Procédé selon la revendication 1, **caractérisé par le fait que** l'on ajoute du cacao au lait, que l'on stérilise le mélange de lait et de cacao, puis que l'on ajoute aseptiquement un extrait aqueux de café ayant été stérilisé thermiquement séparément.

4. Procédé selon l'une des revendications 1 à 3, **caractérisé par le fait que** l'on ajoute un agent de carbonatation stérile.

## Claims

1. Process for preparing a long-life mildly acidic coffee-flavoured milk product, **characterized in that** a neutral milk base free from alkali, stabilising salt or gelling agent is sterilised by UHT, **in that** a previously sterilised aqueous coffee extract is added aseptically and **in that** the mixture is packaged aseptically.

2. Process according to claim 1, **characterized in that** the aqueous coffee extract contains cocoa.

3. Process according to claim 1, **characterized in that** cocoa is added to milk, that the mixture of milk and cocoa is sterilised, and **in that** an aqueous coffee extract that has been separately heat sterilised is added aseptically.

4. Process according to one of claims 1 to 3, **characterized in that** a sterile carbonating agent is added.

## Patentansprüche

1. Verfahren zur Herstellung von schwach saurer flüssiger Milch mit Kaffee langer Haltbarkeit, **dadurch gekennzeichnet, dass** man eine von Alkali, Stabilisierungssalz oder Geliermittel freie neutrale Milchbasis durch UHT sterilisiert, dass man unter aseptischen Bedingungen einen zuvor sterilisierten wässrigen Kaffeeextrakt zusetzt und dass man die Mischung aseptisch konditioniert.

2. Verfahren nach Anspruch 1, **dadurch gekennzeichnet, dass** der wässrige Kaffeeextrakt Kakao enthält.

3. Verfahren nach Anspruch 1, **dadurch gekennzeichnet, dass** man der Milch Kakao zusetzt, dass man die Mischung aus Milch und Kakao sterilisiert und dass man dann unter aseptischen Bedingungen einen wässrigen Kaffeeextrakt zusetzt, der getrennt thermisch sterilisiert wurde.

4. Verfahren nach einem der Ansprüche 1 bis 3, **dadurch gekennzeichnet, dass** man ein steriles Carbonisierungsmittel zusetzt.
